# EUROPÄISCHE PATENTSCHRIFT

(11) **EP 2 921 270 B1**
(45) Veröffentlichungstag und Bekanntmachung des Hinweises auf die Patenterteilung: **24.10.2018**
(21) Anmeldenummer: 15455003.2
(22) Anmeldetag: 19.03.2015
(51) Int. Cl.: B27K 3/00, B32B 21/14, B32B 38/08, C09K 21/12

(54) **FURNIERELEMENT**
VENEER ELEMENT
ÉLÉMENT DE PLACAGE

(30) Priorität: 21.03.2014 AT 502092014
(43) Veröffentlichungstag der Anmeldung: 23.09.2015
(73) Patentinhaber: F. List GmbH, 2842 Thomasberg (AT)
(72) Erfinder: Buchinger, René, 2491 Neufeld an der Leitha (AT); Aigner, Andreas, 8642 St. Lorenzen (AT)
(74) Vertreter: Patentanwaltskanzlei Matschnig & Forsthuber OG

(56) Entgegenhaltungen:
- EP-A1- 1 930 138
- EP-A2- 2 425 945
- WO-A1-2004/110951
- WO-A1-2006/121352
- WO-A2-2012/164143
- CN-B- 102 114 650
- US-A1- 2009 142 613

## Beschreibung

Die Erfindung betrifft ein Furnierelement, umfassend eine, zwei oder mehrere Lagen, wobei zumindest eine äußere Lage aus Furnier gebildet ist, wobei das Furnierelement mit zumindest einem Flammschutzmittel versehen ist, welches zumindest eine Flammschutzmittel ein anorganisches Flammschutzmittel ist. Ein solches Furnierelement ist beispielsweise aus der CN 102114650 B bekannt.

Weiters betrifft die Erfindung ein Verbundelement mit einem Schichtaufbau mit zumindest einer Kernschicht und zumindest einer Deckschicht, wobei die zumindest eine Deckschicht von einem solchen Furnierelement gebildet ist, oder das Verbundelement an gegenüberliegenden Seiten jeweils eine Deckschicht aufweist, und wobei zumindest eine, vorzugsweise beide Deckschichten von einem solchen Furnierelement gebildet sind.

An die im Yachtbau und in Schiffen, insbesondere Kreuzfahrtschiffen verwendeten Materialien, welche etwa beim Innenausbau, z.B. der Kabinen zum Einsatz kommen, werden hohe Anforderungen gestellt, insbesondere was die Feuerfestigkeit dieser Materialien betrifft.

Beispielsweise werden solche Materialien für Wandaufbauten, dekorative Wandelemente, Sichtdecken, Fußboden und Möbel für Yachten und Kreuzfahrtschiffe etc. verwendet.

Neben der Feuerfestigkeit ist es auch noch von Vorteil, wenn diese Materialien relativ leichtgewichtig sind.

Um den Anforderungen des PYC ("Passenger Yacht Code") und des IMO FTP Codes 2010 gerecht zu werden, müssen die im Gesamtaufbau verwendeten Materialien Steuerrad zertifiziert sein. Der PYC verlangt steuerradzugelassene Einzelkomponenten in der Konstruktion von Wänden, Decken und Schotte sowie zusätzlich eine Prüfung des Gesamtaufbaus.

Damit die verwendeten Materialien einen hochwertigen Eindruck vermitteln, ist die Verwendung von Holz, insbesondere von Echtholz wünschenswert. Aus diesem Grund wäre die Verwendung von Echtholzfurnieren wünschenswert.

Es ist eine Aufgabe der Erfindung, ein Furnierelement anzugeben, welches die oben genannten Anforderungen erfüllt.

Insbesondere ist es eine Aufgabe der Erfindung, ein gemäß EG-Schiffsausrüstungsrichtlinie - MED zugelassenes Furnierelement anzugeben.

Diese Aufgabe wird mit einem eingangs erwähnten Furnierelement dadurch gelöst, dass erfindungsgemäß das Flammschutzmittel eine wasserbasierende Lösung ist oder in Form einer wasserbasierenden Lösung vorliegt, wobei vorzugsweise die Lösung einen pH-Wert zwischen 4 und 7 aufweist.

Ein solches Furnierelement erfüllt die Anforderungen des IMO FTP Codes 2010, insbesondere des IMO FTP Codes 2010 Part 5 und die weiteren oben genannten Zertifizierungen.

Mit einem solchen zertifizierten Furnierelement ist eine Zulassung eines Gesamtaufbaus in Form eines eingangs erwähnten Verbundelementes möglich.

Mit der vorliegenden Erfindung wird es möglich, Furniere unabhängig von der Holzart im Yachtbereich einzusetzen und im weiteren einen Gesamtaufbau zuzulassen.

Bis dato gab es kein Echtholzfurnier, das diese Anforderungen erfüllt.

Vorzugsweise ist vorgesehen, dass zumindest die eine oder die mehreren Lagen aus Furnier oder genau nur die eine oder genau nur die mehreren Lagen aus Furnier mit dem zumindest einen Flammschutzmittel versehen ist.

Das Flammschutzmittel, mit welchem vorzugsweise die zumindest eine Lage aus Furnier oder genau die zumindest eine Lage aus Furnier versehen ist, ist eine halogenfreie Lösung. Erfindungsgemäß ist das Flammschutzmittel eine anorganische Lösung. Erfindungsgemäß ist das Flammschutzmittel eine Lösung aus Stickstoff und Phosphor.

Vorzugsweise ist die Lösung mit Additiven versetzt, welche eine gleichmäßige Benetzung der Holzfaser gewährleisten. Vorzugsweise handelt es sich bei diesen Additiven um Tenside (Netzmittel). Weiters liegt der PH-Wert der Lösung erfindungsgemäß zwischen 4 und 7. Dadurch ist die Lösung sehr neutral gegenüber Hölzern.

Vorzugsweise gilt für die Dichte des Flammschutzmittels, dass diese kleiner als 1,058 g/cm³ ist.

Bei einer konkreten Ausführungsform des Furnierelementes ist vorgesehen, dass die Aufnahmemenge des Flammschutzmittels, insbesondere der anorganischen Lösung in der zumindest einen Lage aus Furnier zwischen 8 und 23 Gewichtsprozent, bezogen auf die Darrdichte des Furniers ist. Da Hölzer eine unterschiedliche Dichte aufweisen, muss die Aufnahmemenge bezogen auf das Gewicht immer gleich sein. Die Darrdichte wird als neutrale Größe verwendet, da sich die Dichte mit dem Wassergehalt im Holz ändert.

Bei der sogenannten Darrdichte handelt es sich um die Rohdichte von trockenem Holz. Die Aufnahmemenge ist abhängig von der Dichte und Zusammensetzung (Harze) des zu tränkenden Materials. Durch die Verbesserung der Benetzung durch Zusatz von entsprechenden Additiven kommt es auch zu einer verbesserten Aufnahme bis in die Holzzelle. Dadurch ist garantiert, dass Hölzer im Bereich von 350 - 1050 kg/m³ getränkt werden können und die oben angeführten Kriterien erfüllen.

Der Flammschutz weist vorzugsweise eine klare bis leicht trübe Konsistenz auf, so kommt es auch zu keiner Eigenverfärbung der Holzarten.

Das erfindungsgemäße Furnierelement kann z.B. aus genau einer Lage aus Furnier bestehen. Bei einer anderen Ausführungsform des Furnierelementes ist vorgesehen, dass das Furnierelement aus drei Lagen besteht, wobei eine äußere Lage aus Furnier gebildet ist, welche mit einer mittleren Schicht, welche eine Klebeschicht ist, auf eine dritte, äußere Schicht aufgeklebt ist.

Die dritte Schicht ist dabei beispielsweise ein Kaschiervlies.

Weiters kann vorgesehen sein, dass die Klebeschicht, mit welcher die dritte, äußere Schicht mit der äußeren Lage aus Furnier verklebt ist, aus einem Klebefilm, vorzugsweise einem melamingetränkten Klebefilm gebildet ist. Melamin dient als Klebstoff verfügt über flammschützende Eigenschaften.

Dieser 3-lagige Aufbau besteht vorzugsweise aus einer Cellulose/Polyethylen (PE) Kaschierung, die mit einem Klebefilm, vorzugsweise einem melamingetränkten Klebefilm auf die Furnierlage aufgeklebt wird. Der Klebefilm härtet zur Klebeschicht aus.

Die dritte, äußere Schicht, vorzugsweise das Kaschiervlies, ist mit einem Flammschutzmittel versehen, vorzugsweise getränkt.

Dieses Flammschutzmittel kann identisch sein mit dem Flammschutzmittel für das Furnier.

Beispielsweise ist vorgesehen, dass das Flammschutzmittel für das Kaschiervlies auf einer Stickstoff-Phosphorverbindung basiert, vorzugsweise einer Lösung aus anorganischen Salzen.

Das Kaschiervlies wird vor dem Verkleben mit einem, vorzugsweise weiteren, Flammschutzmittel getränkt. Dieses Flammschutzmittel basiert wiederum auf einer Stickstoff/Phosphorverbindung, ist aber in der Regel nicht identisch zu dem Flammschutzmittel, mit welchem das Furnier versehen ist. Bei dem Flammschutzmittel für das Kaschiervlies handelt es sich um eine Lösung anorganischer Salze, die beim Erhitzen Gase freisetzen, die Sauerstoff verdrängen und so eine brandhemmende Wirkung entfalten.

Die Lage aus Furnier wird dem dafür vorgesehenen Flammschutzmittel ebenfalls vor dem Verkleben versehen, vorzugsweise getränkt, und wenn das Furnier und das Kaschiervlies ausreichend getrocknet sind, erfolgt das Verkleben mit dem Klebefilm.

Bei einer anderen konkreten Ausführungsform des erfindungsgemäßen Furnierelementes ist vorgesehen, dass dieses aus zwei, drei oder mehr Lagen aus Furnier gebildet ist, wobei jeweils zwei benachbarte Lagen aus Furnier mit einer Klebeschicht miteinander verbunden sind.

Die Furnierlagen werden mit dem oben beschriebenen, für das Furniermaterial vorgesehenen Flammschutzmittel versehen, z.B. getränkt, und, sobald diese ausreichend getrocknet sind, mit einem entsprechenden Kleber miteinander verklebt.

Vorzugsweise ist vorgesehen, dass die zumindest eine Klebeschicht von einem Kleber gebildet ist, welcher einen Polykondensationsklebstoff beinhaltet oder aus einem Polykondensationsklebstoff besteht. Dieser Kleber kann, muss aber nicht mit einem Flammschutz versehen sein.

Weiters ist vorzugsweise vorgesehen, dass bei dem 3-lagigen Furnierelement die zumindest eine Furnier-Lage aus Holz, insbesondere Echt-Holz bestehen.

Unter dem Begriff Echtholz versteht man natürlich gewachsenes Holz. Der Begriff "Echtholz" dient zur Unterscheidung von Holzimitat bzw. auch Holzwerkstoffen.

Unter dem Begriff Echtholz werden auch Furniere verstanden, die aus unterschiedlichen Furnierstreifen zusammengesetzt werden, wobei jeder Furnierstreifen natürlich gewachsenes Holz ist.

Bei einer bevorzugten Ausführungsform der Erfindung ist vorgesehen, dass die Dichte des Furnier-Materials, aus welchen die zumindest eine Furnier-Lage besteht, insbesondere die Holzdichte, z.B. die Rohdichte des Holzes, in einem Bereich von 350 - 1200 kg/m³, vorzugsweise in einem Bereich von 400 - 900 kg/m³ liegt.

Weiters ist es von Vorteil, wenn das Furnier-Material, aus welchem die zumindest eine Furnier-Lage besteht, einen organischen Gehalt von 70 % bis 99 % aufweist. Die Angaben der Gewichtsprozente beziehen sich dabei auf eine darrtrockene Furnier. Holz hat organische (brennbare) und anorganische (nicht brennbare Anteile). Je mehr nicht brennbare Anteile enthalten sind, desto schwieriger ist das Furnier zu tränken.

Weiters ist typischerweise vorgesehen, dass die Dicke einer Lage aus Furnier ≤ 2,5 mm ist. Eine Untergrenze für die Dicke einer Lage aus Furnier liegt bei ca. 0,25mm. Typischerweise liegt die Dicke für eine Lage aus Furnier zwischen 0,35 - 0,65 mm.

Beispielsweise weist ein Furnierelement (Furnier, Klebeschicht, Kaschiervlies) bei einer Dicke des Furniers von ca. 0,35 mm eine Dicke von ca. 0,65mm auf.

Im Folgenden ist Erfindung an Hand der Zeichnung näher erörtert. In dieser zeigt
Fig. 1 einen beispielhaften schematischen Schichtaufbau eines 3-lagigen Furnierelementes mit einer Lage aus Furnier,
Fig. 2 einen beispielhaften schematischen Schichtaufbau eines 3-lagigen Furnierelementes, welches zwei Lagen aus Furnier umfasst, und
Fig. 3 einen beispielhaften schematischen Schichtaufbau eines 5-lagigen Furnierelementes, welches drei Lagen aus Furnier umfasst.

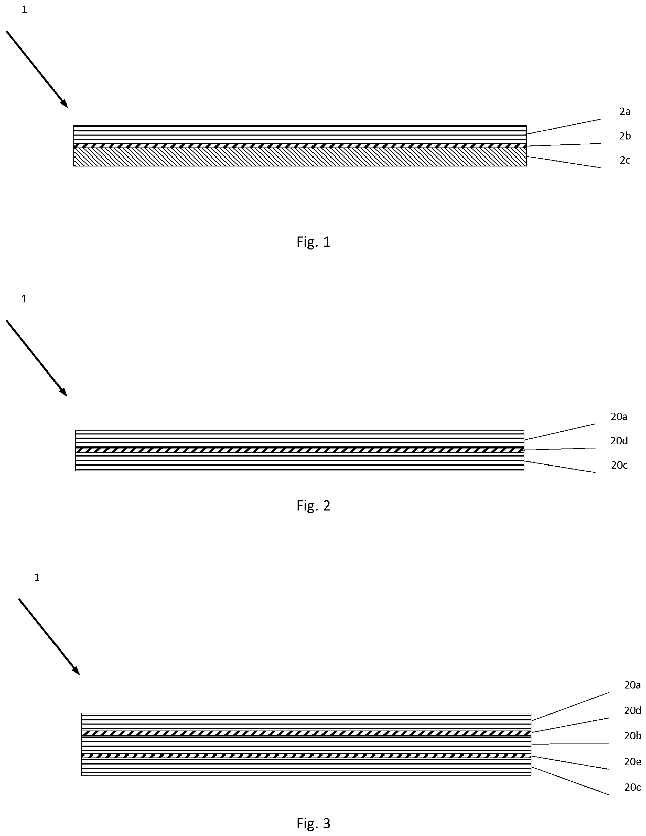

Figur 1 zeigt ein beispielhaftes Furnierelement 1 (d.h. einen Ausschnitt davon) mit einem dreilagigen Aufbau.

Dabei ist dies äußere Lage 2a aus Furnier gebildet ist, welche mit einer mittleren Schicht 2b, welche eine Klebeschicht ist, auf eine dritte, äußere Schicht 2c aufgeklebt ist.

Die Furnier-Lage 2a besteht dabei aus Holz, insbesondere Echt-Holz. Die Dichte des Furnier-Materials, aus welchen diese eine Furnier-Lage 2a besteht, insbesondere die Holzdichte, z.B. die Rohdichte des Holzes, liegt in einem Bereich von 350 - 1200 kg/m³, vorzugsweise in einem Bereich von 400 - 900 kg/m³.

Das Furnier-Material, d.h. das Echt-Holz, aus welchem die Furnier-Lage 2a besteht, weist einen organischen Gehalt von 70 % bis 99 % auf. Die Angaben der Gewichtsprozente beziehen sich dabei auf eine darrtrockene Furnier.

Erfindungsgemäß ist das Furnier mit einem Flammschutzmittel versehen, wie dies weiter unten noch im Detail erörtert wird. Holz hat organische (brennbare) und anorganische (nicht brennbare Anteile). Je mehr nicht brennbare Anteile enthalten sind, desto schwieriger ist das Furnier mit dem Flammschutzmittel zu tränken.

Typischerweise ist die Dicke der Lage 2a aus Furnier ≤ 2,5 mm. Eine Untergrenze für die Dicke einer Lage aus Furnier liegt bei ca. 0,35mm. Typischerweise liegt die Dicke für eine Lage aus Furnier zwischen 0,35 - 0,65 mm.

Das Furnierelement 1 (Furnier 2a, Klebeschicht 2b, Kaschiervlies 2c) weist bei einer Dicke des Furnier 2a von ca. 0,35 mm eine Dicke von ca. 0,65mm auf.

Diese Furnier 2a ist mit einer Klebeschicht 2b mit der dritten Schicht 2c verklebt, wobei es sich in dem gezeigten Beispiel bei der dritten Schicht 2c um ein Kaschiervlies handelt.

Die Klebeschicht 2b, mit welcher die dritte, äußere Schicht 2c mit der äußeren Lage 2a aus Furnier verklebt ist, aus einem Klebefilm, vorzugsweise einem melamingetränkten Klebefilm gebildet ist.

Die dritte Schicht/Lage 2c besteht aus einer Cellulose/Polyethylen (PE) Kaschierung, die mit einem Klebefilm, vorzugsweise einem melamingetränkten Klebefilm auf die Furnierlage aufgeklebt wird. Der Klebefilm härtet zur Klebeschicht 2b aus.

Vor dem Verkleben wird das Furnier 2a mit dem entsprechenden Flammschutzmittel versehen, vorzugsweise getränkt, wie dies noch beschrieben wird. Ebenso wird das Kaschiervlies 2c, wie anschließend beschrieben, mit dem dazu vorgesehenen Flammschutzmittel versehen.

Vorzugsweise getränkt. Wenn Furnier 2a und Kaschiervlies ausreichend getrocknet sind, werden diese miteinander verklebt.

Das Kaschiervlies 2c ist mit einem (weiteren) Flammschutzmittel versehen, vorzugsweise getränkt. Dieses Flammschutzmittel kann identisch sein mit dem Flammschutzmittel für das Furnier, vorzugsweise ist diese aber unterschiedlich und es ist vorgesehen, dass das Flammschutzmittel für das Kaschiervlies auf einer Stickstoff-Phosphorverbindung basiert, vorzugsweise einer Lösung aus anorganischen Salzen.

Das Kaschiervlies 2c wird vor dem Verkleben mit diesem, vorzugsweise weiteren, Flammschutzmittel getränkt. Bei dem Flammschutzmittel für das Kaschiervlies 2c handelt es sich wie oben beschrieben um eine Lösung anorganischer Salze, die beim Erhitzen Gase freisetzen, die Sauerstoff verdrängen und so eine brandhemmende Wirkung entfalten.

Weiters ist das Furnierelement 1 mit zumindest einem Flammschutzmittel versehen ist, welches zumindest eine Flammschutzmittel ein
a) anorganisches, vorzugsweise anorganisch halogenfreies oder
b) organisches, vorzugsweise organisch halogenfreies Flammschutzmittel ist.

Bei dem gezeigten Beispiel ist das Flammschutzmittel eine nichthalogene, wasserbasierende anorganische Lösung aus Stickstoff und Phosphor bzw. basiert auf einer solchen Lösung. Mit diesem Flammschutzmittel ist die Lage 2a aus Furnier versehen.

Die Lösung ist vorzugsweise mit Additiven versetzt, welche eine gleichmäßige Benetzung der Holzfaser gewährleisten. Vorzugsweise handelt es sich bei den Additiven um Tenside (Netzmittel).

Weiters ist es von Vorteil, wenn der PH-Wert der Lösung liegt zwischen 4 und 7 liegt. Dadurch ist die Lösung sehr neutral gegenüber Hölzern.

Außerdem ist mit Vorteil vorgesehen, dass die Aufnahmemenge des Flammschutzmittels, insbesondere der anorganischen Lösung in der zumindest einen Lage 2a aus Furnier zwischen 8 und 23 Gewichtsprozent, bezogen auf die Darrdichte des Furniers ist.

Bei der sogenannten Darrdichte handelt es sich um die Rohdichte von trockenem Holz. Die Aufnahmemenge ist abhängig von der Dichte und Zusammensetzung (Harze) des zu tränkenden Materials. Durch die Verbesserung der Benetzung durch Zusatz von entsprechenden Additiven kommt es auch zu einer verbesserten Aufnahme bis in die Holzzelle. Dadurch ist garantiert, dass Hölzer im Bereich von 350 - 1050 kg/m³ getränkt werden können und die oben angeführten Kriterien erfüllen.

Der Flammschutz weist vorzugsweise eine klare bis leicht trübe Konsistenz auf, so kommt es auch zu keiner Eigenverfärbung der Holzarten.

Figur 2 zeigt ein weiteres Beispiel eines Furnierelementes 1. Dieses besteht aus zwei äußeren Schichten 20a, 20b, die jeweils von einer Furnierlage gebildet sind, und einer Klebeschicht, welche die beiden Furnierlagen 20a, 20b miteinander verbindet. Das Furniermaterial ist mit einem wie oben schon beschriebenen Flammschutzmittel versehen, und die beiden Furnierlagen sind mit einer Klebeschicht 20d verklebt. Die Klebeschicht ist vorzugsweise von einem Kleber gebildet, welcher einen Polykondensationsklebstoff beinhaltet oder aus einem Polykondensationsklebstoff besteht.

Figur 3 zeigt noch einen Aufbau, bei welchem neben den beiden äußeren Schichten in Form einer Furnierlage 20a, 20c noch eine mittlere Schicht aus einer Furnierlage 20b vorgesehen ist. Die Furnierlagen 20a, 20b sowie 20b, 20c sind mit einer Klebeschicht miteinander verklebt, welche Klebeschichten vorzugsweise von einem Kleber gebildet sind, welcher einen Polykondensationsklebstoff beinhaltet oder aus einem Polykondensationsklebstoff besteht. Unterschiedliche Klebeschichten können, müssen aber nicht einen unterschiedlichen Klebstoff aufweisen. Die Furnierlagen 20a, 20b, 20c werden vor dem Verkleben mit einem Flammschutzmittel wie zu Figur 1 bereits beschrieben versehen.

Mit den oben an Hand von Figur 1 - 3 beschriebenen Aufbauen kann ein Furnierelement erzielt werden, bei welchem bei einem Bestrahlen mit einer definierten Bestrahlungsstärke von 50KW/m² der kritischer Wärmefluss beim Verlöschen CFE ≥ 20 kW/m²,
- die Wärme für anhaltendes Brennen Qsb ≥ 1,5 MJ/m²,
- die freigesetzte Wärmemenge Qt ≤ 0,2 MJ, und
- die maximale Wärmefreisetzungsrate Qp ≤ 1,0 kW
beträgt.

Ein solches Furnierelement erfüllt die Anforderungen des IMO FTP Codes 2010, insbesondere des IMO FTP Codes 2010 Part 5 und die weiteren oben genannten Zertifizierungen.

Mit einem solchen zertifizierten Furnierelement ist eine Zulassung eines Gesamtaufbaus in Form eines eingangs erwähnten Verbundelementes möglich.

Mit der vorliegenden Erfindung wird es möglich, Furniere unabhängig von der Holzart im Yachtbereich einzusetzen und im weiteren einen Gesamtaufbau zuzulassen.

Das Flammschutzmittel wird z.B. im Tauchverfahren oder im Kesseldruckverfahren (Autoklav) in das Furnier, welches die Lage 2a bildet, eingebracht. Der Prozess der Tränkung im Tauchverfahren dauert typischerweise 12 Stunden, der Prozess der Kesseltränkung typischerweise 2 - 4 Stunden.

Im Prozess kommt es dabei zu keinen Verfärbungen der Furnier oder Auskristallisierungen im eingesetzten Zustand.

Hauptverantwortlich dafür ist die beschriebene, verwendete Art des Flammschutzmittels für das Furnier sowie die Konzentration beim Tränkprozess. Der Flammschutz wird üblicherweise mit Wasser verdünnt. Erhöht man die Konzentration des Flammschutzmittels, kann es zu Ausblutungen kommen, verringert man die Konzentration, kann der Flammschutz nicht mehr gewährleistet sein. Der verwendete Flammschutz dringt in die Zellwand des Holzes ein und kann somit schwerer ausgewaschen werden. Haftet der Flammschutz nur an der Oberfläche, sind Probleme wie schlechte Haftung oder Ausblutungen deutlich zu erkennen. Halogenisierte Flammschutzmittel hingegen zeigen auch ein sehr hygroskopisches Verhalten, das in Kontakt mit Wasser zu fleckigen Rändern führt.

Außerdem ist das erfindungsgemäß behandelte Furnier mit herkömmlichen Klebstoffsystemen und Lacksystemen verarbeitbar. Andere flammgeschützte Furniere zeigen immer wieder Haftungsprobleme sowie Auskristallisierungen oder Verfärbungen."

Bei der Prüfung auf "Schwerentflammbarkeit" werden die Materialien einer definierten Bestrahlungsstärke (50KW/m²) ausgesetzt, die von einem Wärmestrahler erzeugt wird. Während der Tests messen und registrieren die Prüfer die Entzündungszeit, die Flammenausbreitung (CFE), das Verlöschen der Flammen und die Wärmefreisetzung (Qₜ und Qₚ). Aus den detektierten Werten errechnet sich dann die Geschwindigkeit der Flammenausbreitung (Q_{sb}).

Das erfindungsgemäße Furnierelement erfüllt die Anforderungen auf "Schwerentflammbarkeit" gemäß IMO 2010 FTPC Teil 5. Außerdem dürfen die Materialien obendrein im Falle eines Brandes weder außergewöhnlich große Rauchmengen erzeugen, noch giftige Stoffe freisetzen. Dies ist gemäß IMO 2010 FTPC Teil 2 nachzuweisen. Davon ausgenommen sind Materialien, deren gesamte Wärmefreisetzung Qₜ ≤ 0,2 MJ und maximale Wärmefreisetzungsrate Qₚ ≤ 1,0 kW betragen; diese Bedingungen werden von dem erfindungsgemäßen Furnierelement erfüllt, sodass eine Prüfung gemäß Part 2 nicht notwendig ist.

## Patentansprüche

1. Furnierelement (1), umfassend eine, zwei oder mehrere Lagen (2a, 2b, 2c; 20a, 20b, 20c, 20d, 20e), wobei zumindest eine äußere Lage (2a; 20a, 20b, 20c) aus Furnier gebildet ist, wobei
das Furnierelement (1) mit zumindest einem Flammschutzmittel versehen ist, welches zumindest eine Flammschutzmittel ein
anorganisches Flammschutzmittel ist,
**dadurch gekennzeichnet, dass**
das Flammschutzmittel eine wasserbasierende anorganische Lösung aus Stickstoff und Phosphor ist oder in Form einer wasserbasierenden anorganischen Lösung aus Stickstoff und Phosphor vorliegt, wobei die Lösung einen pH-Wert zwischen 4 und 7 aufweist.

2. Furnierelement nach Anspruch 1, **dadurch gekennzeichnet, dass** zumindest die eine oder die mehreren Lagen (2a; 20a, 20b, 20c) aus Furnier oder genau nur die eine oder genau nur die mehreren Lagen (2a; 20a, 20b, 20c) aus Furnier mit dem zumindest einen Flammschutzmittel versehen ist.

3. Furnierelement nach Anspruch 1 oder 2, **dadurch gekennzeichnet, dass** das Flammschutzmittel eine halogenfreie Lösung ist.

4. Furnierelement nach einem der Ansprüche 1 bis 3, **dadurch gekennzeichnet, dass** die Lösung mit Additiven versetzt ist, welche eine gleichmäßige Benetzung der Holzfaser gewährleisten.

5. Furnierelement nach einem der Ansprüche 1 bis 4, **dadurch gekennzeichnet, dass** die Aufnahmemenge des Flammschutzmittels, insbesondere der anorganischen Lösung in der zumindest einen Lage (2a; 20a, 20b, 20c) aus Furnier zwischen 8 und 23 Gewichtsprozent, bezogen auf die Darrdichte des Furniers ist.

6. Furnierelement nach einem der Ansprüche 1 bis 5, **dadurch gekennzeichnet, dass** das Furnierelement (1) aus drei Lagen (2a, 2b, 2c) besteht, wobei eine äußere Lage (2a) aus Furnier gebildet ist, welche mit einer mittleren Schicht (2b), welche eine Klebeschicht ist, auf eine dritte, äußere Schicht (2c) aufgeklebt ist, und wobei vorzugsweise die dritte Schicht (2c) ein Kaschiervlies ist, und wobei beispielsweise die Klebeschicht (2b), mit welcher die dritte, äußere Schicht (2c) mit der äußeren Lage (2a) aus Furnier verklebt ist, aus einem Klebefilm, vorzugsweise einem melamingetränkten Klebefilm gebildet ist.

7. Furnierelement nach Anspruch 6, **dadurch gekennzeichnet, dass** die dritte, äußere Schicht (2c), vorzugsweise das Kaschiervlies, mit einem Flammschutzmittel versehen, vorzugsweise getränkt ist.

8. Furnierelement nach Anspruch 6 oder 7, **dadurch gekennzeichnet, dass** das Flammschutzmittel, wenn die dritte Schicht (2c) ein Kaschiervlies ist, für das Kaschiervlies auf einer Stickstoff-Phosphorverbindung basiert, vorzugsweise einer Lösung aus anorganischen Salzen.

9. Furnierelement nach einem der Ansprüche 1 bis 5, **dadurch gekennzeichnet, dass** es aus zwei, drei oder mehr Lagen (20a, 20b, 20c) aus Furnier gebildet ist, wobei jeweils zwei benachbarte Lagen aus Furnier mit einer Klebeschicht (20d, 20e) miteinander verbunden sind, und wobei vorzugsweise die zumindest eine Klebeschicht (20d, 20e) von einem Kleber gebildet ist, welcher einen Polykondensationsklebstoff beinhaltet oder aus einem Polykondensationsklebstoff besteht.

10. Furnierelement nach einem der Ansprüche 1 bis 9, **dadurch gekennzeichnet, dass** die zumindest eine Furnier-Lage (2a; 20a, 20b, 20c) aus Holz, insbesondere Echt-Holz bestehen.

11. Furnierelement nach einem der Ansprüche 1 bis 10, **dadurch gekennzeichnet, dass** die Dichte des Furnier-Materials, aus welchen die zumindest eine Furnier-Lage (2a; 20a, 20b, 20c) besteht, insbesondere die Holzdichte, z.B. die Rohdichte des Holzes, in einem Bereich von 350 -1200 kg/m³, vorzugsweise in einem Bereich von 400 - 900 kg/m³ liegt.

12. Furnierelement nach einem der Ansprüche 1 bis 11, **dadurch gekennzeichnet, dass** das Furnier-Material, aus welchem die zumindest eine Furnier-Lage (2a; 20a, 20b, 20c) besteht, einen organischen Gehalt von 70 % bis 99 % aufweist.

13. Furnierelement nach einem der Ansprüche 1 bis 12, **dadurch gekennzeichnet, dass** die Dicke einer Lage (2a; 20a, 20b, 20c) aus Furnier ≤ 2,5 mm ist.

14. Verbundelement mit einem Schichtaufbau mit zumindest einer Kernschicht und zumindest einer Deckschicht, **dadurch gekennzeichnet, dass** die zumindest eine Deckschicht von einem Furnierelement nach einem der Ansprüche 1 bis 13 gebildet ist, wobei beispielsweise das Verbundelement an gegenüberliegenden Seiten jeweils eine Deckschicht aufweist, und wobei zumindest eines, vorzugsweise beide Deckschichten als Furnierelement nach einem der Ansprüche 1 bis 13 ausgebildet sind.

## Claims

1. A veneer element (1) comprising one, two or multiple layers (2a, 2b, 2c; 20a, 20b, 20c, 20d, 20e), wherein at least one outer layer (2a; 20a, 20b, 20c) is formed from veneer, wherein
the veneer element (1) is provided with at least one flame retardant, which at least one flame retardant is an inorganic flame retardant,
**characterized in that**
the flame retardant is a water-based inorganic solution of nitrogen and phosphor or is present in the form of a water-based inorganic solution of nitrogen and phosphor, wherein the solution has a pH value of between 4 and 7.

2. The veneer element according to claim 1, **characterized in that** at least the one or multiple layers (2a; 20a, 20b, 20c) of veneer or precisely only the one or precisely only the multiple layers (2a; 20a, 20b, 20c) of veneer is provided with the at least one flame retardant.

3. The veneer element according to claim 1 or 2, **characterized in that** the flame retardant is a halogen-free solution.

4. The veneer element according to one of claims 1 to 3, **characterized in that** the solution is mixed with additives which ensure a uniform wetting of the wood fibre.

5. The veneer element according to one of claims 1 to 4, **characterized in that** the uptake amount of flame retardant, in particular of inorganic solution in the at least one layer (2a; 20a, 20b, 20c) of veneer, is between 8 and 23 weight percent, based on the dry density of the veneer.

6. The veneer element according to one of claims 1 to 5, **characterized in that** the veneer element (1) consists of three layers (2a, 2b, 2c), wherein an outer layer (2a) is formed of veneer, which is adhered with a centre layer (2b), which is an adhesive layer, to a third outer layer (2c) and wherein the third layer (2c) is preferably a backing fleece and wherein, for example, the adhesive layer (2b) with which the third, outer layer (2c) is bonded with the outer layer (2a) of veneer is formed from an adhesive film, preferably a melamine-impregnated adhesive film.

7. The veneer element according to claim 6, **characterized in that** the third, outer layer (2c), preferably the backing fleece, is provided, preferably impregnated, with a flame retardant.

8. The veneer element according to claim 6 or 7, **characterized in that** the flame retardant, when the third layer (2c) is a backing fleece, for the backing fleece is based on a nitrogen-phosphorus compound, preferably a solution of inorganic salts.

9. The veneer element according to one of claims 1 to 5, **characterized in that** it is formed from two, three or multiple layers (20a, 20b, 20c) of veneer, wherein two adjacent layers of veneer are connected to one another with an adhesive layer (20d, 20e) in each case, and wherein the at least one adhesive layer (20d, 20e) is preferably formed from an adhesive which contains a polycondensation adhesive or comprises a polycondensation adhesive.

10. The veneer element according to one of claims 1 to 9, **characterized in that** the at least one veneer layer (2a; 20a, 20b, 20c) is made of wood, in particular real wood.

11. The veneer element according to one of claims 1 to 10, **characterized in that** the density of the veneer material from which the at least one veneer layer (2a; 20a, 20b, 20c) is made, in particular the wood density, e.g. the bulk density of the wood, lies in a range of 350-1200 kg/m³, preferably in a range of 400 to 900 kg/m³.

12. The veneer element according to one of claims 1 to 11, **characterized in that** the veneer element from which the at least one veneer layer (2a; 20a, 20b, 20c) is made has an organic content of 70% to 99%.

13. The veneer element according to one of claims 1 to 12, **characterized in that** the thickness of a layer (2a; 20a, 20b, 20c) of veneer is ≤ 2.5 mm.

14. A composite element with a layer structure having at least one core layer and at least one top layer, **characterized in that** the at least one top layer is formed from a veneer element according to one of claims 1 to 13, wherein, for example, the composite element has a top layer at each of the opposite sides and wherein at least one, preferably both top layers, are formed as a veneer element according to one of claims 1 to 13.

## Revendications

1. Elément de placage (1), comportant une, deux couches ou plus (2a, 2b, 2c ; 20a, 20b, 20c, 20d, 20e), dans lequel au moins une couche extérieure (2a ; 20a, 20b, 20c) de placage est formée, dans lequel l'élément de placage (1) est pourvu d'au moins un agent ignifugeant, lequel au moins un agent ignifugeant est un agent ignifugeant inorganique,
**caractérisé par le fait que**
l'agent ignifugeant est une solution inorganique à base aqueuse d'azote et de phosphore ou se présente sous la forme d'une solution inorganique à base aqueuse d'azote et de phosphore, la solution présentant une valeur de pH entre 4 et 7.

2. Elément de placage selon la revendication 1, **caractérisé par le fait qu'**au moins la ou les différentes couches (2a ; 20a, 20b, 20c) de placage ou exactement seulement la ou exactement les différentes couches (2a ; 20a, 20b, 20c) de placage est ou sont pourvue (s) dudit au moins un agent ignifugeant.

3. Elément de placage selon l'une des revendications 1 ou 2, **caractérisé par le fait que** l'agent ignifugeant est une solution exempte d'halogène.

4. Elément de placage selon l'une des revendications 1 à 3, **caractérisé par le fait que** la solution est mélangée avec des additifs, lesquels assurent un mouillage uniforme des fibres de bois.

5. Elément de placage selon l'une des revendications 1 à 4, **caractérisé par le fait que** la quantité d'inclusion de l'agent ignifugeant, en particulier de la solution inorganique dans ladite au moins une couche (2a ; 20a, 20b, 20c) de placage est entre 8 et 23 pour cent en poids, par rapport à la densité à l'état sec du placage.

6. Elément de placage selon l'une des revendications 1 à 5, **caractérisé par le fait que** l'élément de placage (1) est composé de trois couches (2a, 2b, 2c), dans lequel une couche extérieure (2a) de placage est formée, laquelle est collée avec une couche intermédiaire (2b), qui est une couche adhésive, sur une troisième couche extérieure (2c), et dans lequel, de préférence, la troisième couche (2c) est une nappe de laminage, et dans lequel, par exemple, la couche adhésive (2b), avec laquelle la troisième couche extérieure (2c) est collée à la couche extérieure (2a) de placage, est formée d'un film adhésif, de préférence d'un film adhésif imprégné de mélamine.

7. Elément de placage selon la revendication 6, **caractérisé par le fait que** la troisième couche extérieure (2c), de préférence la nappe de laminage, est pourvue, de préférence imprégnée, d'un agent ignifugeant.

8. Elément de placage selon l'une des revendications 6 ou 7, **caractérisé par le fait que,** lorsque la troisième couche (2c) est une nappe de laminage, l'agent ignifugeant pour la nappe de laminage est à base d'un composé d'azote-phosphore, de préférence d'une solution de sels inorganiques.

9. Elément de placage selon l'une des revendications 1 à 5, **caractérisé par le fait que** il est formé de deux, trois couches ou plus (20a, 20b, 20c) de placage, dans lequel à chaque fois deux couches de placage adjacentes sont reliées entre elles par une couche adhésive (20d, 20e), et dans lequel, de préférence, ladite au moins une couche adhésive (20d, 20e) est formée d'un adhésif, lequel comprend un adhésif de polycondensation ou est composé d'un adhésif de polycondensation.

10. Elément de placage selon l'une des revendications 1 à 9, **caractérisé par le fait que** ladite au moins une couche de placage (2a ; 20a, 20b, 20c) est composée de bois, en particulier de bois véritable.

11. Elément de placage selon l'une des revendications 1 à 10, **caractérisé par le fait que** la densité du matériau de placage, dont est composée ladite au moins une couche de placage (2a ; 20a, 20b, 20c), en particulier la densité de bois, par exemple la densité apparente du bois, se situe dans une plage de 350 - 1200 kg/m³, de préférence dans une plage de 400 - 900 kg/m³.

12. Elément de placage selon l'une des revendications 1 à 11, **caractérisé par le fait que** le matériau de placage, dont est composée ladite au moins une couche de placage (2a ; 20a, 20b, 20c), présente une teneur organique de 70% à 99%.

13. Elément de placage selon l'une des revendications 1 à 12, **caractérisé par le fait que** l'épaisseur d'une couche (2a ; 20a, 20b, 20c) de placage est ≤ 2,5 mm.

14. Elément composite ayant une structure en couches avec au moins une couche de coeur et au moins une couche de recouvrement, **caractérisé par le fait que** ladite au moins une couche de recouvrement est formée d'un élément de placage selon l'une des revendications 1 à 13, dans lequel, par exemple, l'élément composite présente une couche de recouvrement sur chacun de ses côtés opposés, et dans lequel au moins une, de préférence les deux couches de recouvrement sont formées comme élément de placage selon l'une des revendications 1 à 13.
